# EUROPEAN PATENT SPECIFICATION

(11) **EP 1 279 275 B1**
(45) Date of publication and mention of the grant of the patent: **25.01.2006**
(21) Application number: 00931226.5
(22) Date of filing: 01.05.2000
(51) Int. Cl.: H04M 15/00

(54) **A COMMUNICATIONS DATA STORAGE ARRANGEMENT**
KOMMUNIKATIONSDATENSPEICHERUNGSEINRICHTUNG
SYSTEME DE STOCKAGE DE DONNEES DE COMMUNICATIONS

(43) Date of publication of application: 29.01.2003
(73) Proprietor: TELEFONAKTIEBOLAGET LM ERICSSON (publ), 164 83 Stockholm (SE)
(72) Inventor: BURGERS, Rob, NL-5612 RB Eindhoven (NL); VAN DARTEL, Koen, NL-5012 HA Tilburg (NL); LEWIS, Peter, NL-5122 HP Rijen (NL)
(74) Representative: Tonscheidt, Andreas
(86) International application number: PCT/EP2000/004392
(87) International publication number: WO 2001/084819

(56) References cited:
- WO-A-98/49825
- WO-A-99/30480
- US-A- 6 052 448

## Description

This invention relates to switching and operational support systems in the area of general communications, and more particularly, to a new type of telecommunications or datacommunications data storage arrangement.

Today many telecommunication operators have storage databases that they use to record customer and call and service related data. This data collected in storage database is then used to analyze for example different services or customer behaviour. By analyzing it is possible to discover which services to offer to which customers as well as differentiate between different customers, detect fraud and predict customer churn. This information helps the operator to provide better service to the customers.

In a communications network, a network element e.g. a telephony switch, is used to switch speech and data signals coming from another part of network. While performing this function the network element also generates a lot of data, which is then used for different purposes e.g. billing the customer for the phone call, billing another operator for the use of the network, or statistical data handling.

In an ordinary network element this data is combined to form several different data streams to come out of the network element. Each stream consists of a different subset information of the total traffic information. Such data streams are for instance customer billing information data stream, statistical information data stream, operational and maintenance information data stream, customer complaint audit data stream and inter-operator billing information data stream.

In current communications networks the traffic information is stored in the database as call related data and as service related data. The information that is stored can be for example call related billing data or usage related service data.

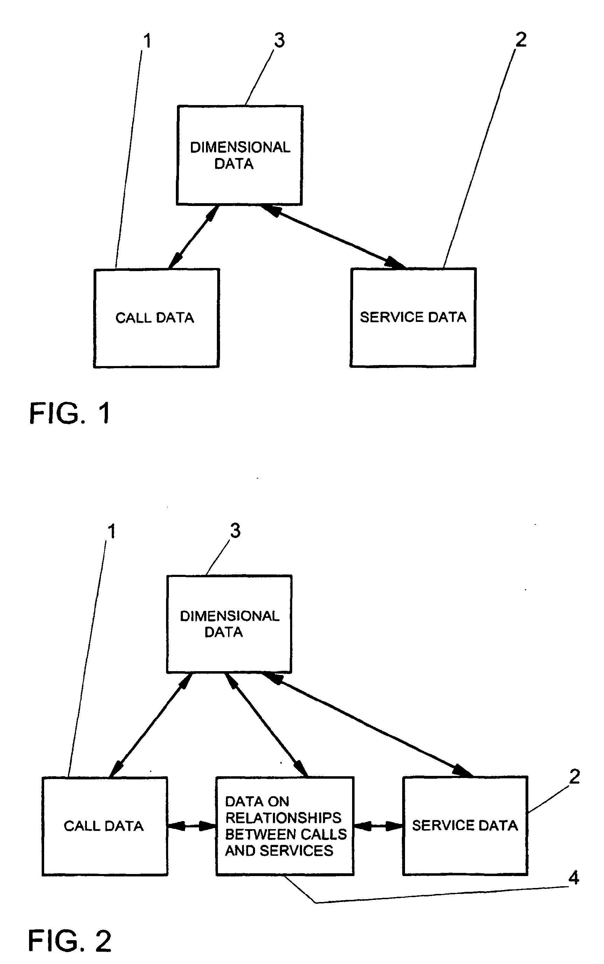

In the following, the prior art solutions will be described in more detail with reference to the accompanying figure 1 which is a block diagram of a communications data storage arrangement according to prior art.

Figure 1 shows a block diagram of a communications data storage arrangement according to prior art. All the call data records are stored in call data storage 1. Likewise all service data records are stored in service data storage 2. The dimensional data such as e.g. customer data or product data is stored in a separate dimensional data storage 3. The telecommunication operators then use the data stored in the data storages 1,2,3 in different operational support systems. These operational support systems perform queries by reading the data storages 1,2 several times.

For example when performing a query on how a certain group of customers have used a specific service, an operator first has to determine the group of customers from a dimensional data storage 3 and the service from another dimensional data storage 3. Operator then reads through the call data storage 1 and finds out the calls made by this group of customers. Finally the operator reads through the service data storage 2 for each found customer call and tries to determine whether the specified service was used.

In the area of communications the traffic events, such as calls and services, are stored in databases as facts. The output from communication networks is still typically tailored for traditional applications such as billing, accounting, statistics, etc. These applications have in common that they do not require a thorough understanding of the relationships between the facts.

The existing decision support systems in the communications area are generally based upon the output that was originally intended for other applications, they do not determine nor store a complete set of relationships between the facts. As the operational support systems have developed, there has also arisen a need to understand the relationships between the traffic events such as calls and services. However, existing databases are not equipped to store information regarding such relationships.

There are some prior art support systems in which first the call data records are stored in call data storage 1 and service data records are stored in service data storage 2. After the records are stored the relationships between calls and services is determined.

These prior art support systems require a great deal of domain knowledge by the end-user system. Also the query performance is reasonably poor since the relationships are not readily available but have to be computed based on complex queries. These queries may need to be run frequently.

In the view of the prior art there is a clear need for a new type of communications data storage arrangement that would provide a detailed picture of calls, services and their relationships. Lack of such a solution has already for a quite some time been a stumbling block for the further development of the current operational support systems as well as for the introduction of new analysis applications.

The aim of this invention is to overcome the drawbacks of the prior art solutions and to provide a new type of communications data storage arrangement.

According to the first aspect of the present invention there is provided a communications data storage arrangement in which the call data records are stored in call data storage, service data records are stored in service data storage, and dimensional data records are stored in dimensional data storage, which arrangement is characterized by that also the relationships between call data and service data, as well as the characteristics of these relationships, are stored as attributes in a relationship data storage.

A more complete understanding of the method and the arrangement of the present invention may be obtained by the preferred embodiments that follow, taken in conjunction with the accompanying drawings, wherein:
Figure 1 is a block diagram of a communications data storage arrangement according to prior art,
Figure 2 is a block diagram of a communications data storage arrangement according to the present invention.

The prior art solutions have been described in drawing 1. In the following, the solution according to the present invention will be described in more detail with reference to the accompanying drawing 2.

Figure 2 shows a block diagram of a communications data storage arrangement according to the present invention. As in the prior art arrangements all the call data records are stored in call data storage 1. Likewise as in the prior art arrangements all service data records are stored in service data storage 2. The dimensional data such as e.g. customer data or product data is stored in a separate dimensional data storage 3. In a communications data storage arrangement according to the present invention also the relationships between call data and service data, as well as the characteristics of these relationships, are stored as attributes in a relationship data storage 4.

The telecommunication operators then use both the data stored in the data storages 1, 2, 3 as well as the relationship data stored in the data storages 4 in different operational support systems. For example, when performing a query on how a certain group of customers have used a specific service, operator can first determine the group of customers from a dimensional data storage 3 determines and the service from another dimensional data storage 3. Operator can then read through the call data storage 1 and find out the calls made by this group of customers. Then the operator can read out the services relating to these calls directly from the relationship data storage 4. Optionally the operator can start the query directly from the relationship data storage 4 and then read the relating call and service records.

In a communications data storage arrangement according to the present invention the call data storage 1, the service data storage 2 and the relationship data storage 4 can be located in a same physical memory or in separate physical memories. The data storages 1, 2, 3, 4 can for example be utilized in data warehouse arrangements.

The communications data storage arrangement according to the invention can be used in any communications network including circuit switched and packet switched networks. The communications data storage arrangement according to the invention can be used with any communications services including telephony calls, Voice over IP calls (IP, Internet Protocol), Internet services, IP interconnection, etc.

The communications data storage arrangement according to the invention can be used to store data collected from multiple different network elements, including telephony switches, network nodes, routers, media gateways, proxy servers, AAA-servers, etc.

With the help of a solution according to the invention the decision support systems can efficiently analyze the facts in combination with the relationship between these facts. For a decision support system that stores detailed information about facts in fact tables, storing the relationships between these facts in the underlying database has a significant added value.

An example of the communications data storage arrangement according to the present invention can be the CCBS-service (CCBS, Call Completion on Busy Subscribers). In CCBS-service the subscriber attempts to make a call but encounters busy tone. Next the subscriber orders the network to make another attempt when the line of the called subscriber becomes available. When the line becomes available, the network sets up the ordered call.

If only the facts had been stored, then the fact that the second call was attempted on account of the CCBS-service could not easily be determined. By additionally storing this relationship, more information can be extracted from the database. Determining the relationships at the time of loading can be done more efficiently than after the data has been loaded, because only relationships that involve the newly loaded facts have to be considered.

In a communications data storage arrangement according to the present invention more information can be extracted from the database in an efficient manner, because the relationships are readily stored in the form of objects that can be queried directly. Less domain knowledge by the end-user or end-user system is required in order to be able to analyze relationships between facts.

## Claims

1. A support system with a communications data storage arrangement, in which call data records with call data relating to traffic information are stored in call data storage (1), service data records with usage related service data are stored in service data storage (2), and dimensional data records related to customer or products are stored in dimensional data storage (3), being **characterized in that** the arrangement is adapted to store the relationships between call data and service data, as well as the characteristics of these relationships, as attributes in a relationship data storage (4), at the time of loading, for use in operational support systems.

2. A support system with a communications data storage arrangement according to Claim 1, **characterized in that** the data storages (1), (2), (4) are adapted to be utilized in a data warehouse arrangement.

3. A support system with a communications data storage arrangement according to Claim 1 or Claim 2, **characterized in that** the data storage arrangement is adapted to be used in a circuit switched network.

4. A support system with a communications data storage arrangement according to Claim 1 or Claim 2, **characterized in that** the data storage arrangement is adapted to be used in a packet switched network.

5. A support system with a communications data storage arrangement according to Claim 1 or Claim 2, **characterized in that** the data storage arrangement is adapted to be used with telephony calls.

6. A support system with a communications data storage arrangement according to Claim 1 or Claim 2, **characterized in that** the data storage arrangement is adapted to be used with "Voice over IP" services.

7. A support system with a communications data storage arrangement according to Claim 1 or Claim 2, **characterized in that** the data storage arrangement is adapted to be used with internet services.

8. A support system with a communications data storage arrangement according to Claim 1 or Claim 2, **characterized in that** the data storage arrangement is adapted to be used with "IP interconnection" services.

9. A support system with a communications data storage arrangement according to Claim 1 or Claim 2, **characterized in that** the data storage arrangement is adapted to store data collected from multiple different network elements.

10. A support system with a communications data storage arrangement according to any of the preceding claims, **characterized in that** the call data storage (1), the service data storage (2) and the relationship data storage (4) are located in a same physical memory.

11. A support system with a communications data storage arrangement according to any of the preceding claims 1-9, **characterized in that** the call data storage (1), the service data storage (2) and the relationship data storage (4) are located in separate physical memories.

## Patentansprüche

1. Unterstützungssystem mit einer Kommunikationsdatenspeicherungseinrichtung, in der Verbindungsdatensätze mit Verbindungsdaten bezüglich Verkehrsinformationen in Verbindungsdatenspeicherung (1) gespeichert sind, Dienstdatensätze mit Nutzungsbezogenen Dienstdaten in Dienstdatenspeicherung (2) gespeichert sind, und Dimensionsdatensätze bezüglich Kunden oder Produkten in Dimensionsdatenspeicherung (3) gespeichert sind, **dadurch gekennzeichnet, daß** die Einrichtung Verhältnisse zwischen Verbindungsdaten und Dienstdaten wie auch die Eigenschaften dieser Verhältnisse als Merkmale zur Ladezeit in einer Verhältnisdatenspeicherung (4) zur Verwendung in Betriebsunterhaltungssystemen speichern kann.

2. Unterstützungssystem mit einer Kommunikationsdatenspeicherungseinrichtung nach Anspruch 1, **dadurch gekennzeichnet, daß** die Datenspeicherungen (1), (2), (4) in einer Data-Warehouse-Anordnung benutzt werden können.

3. Unterstützungssystem mit einer Kommunikationsdatenspeicherungseinrichtung nach Anspruch 1 oder Anspruch 2, **dadurch gekennzeichnet, daß** die Datenspeicherungseinrichtung in einem leitungsvermittelten Netz benutzt werden kann.

4. Unterstützungssystem mit einer Kommunikationsdatenspeicherungseinrichtung nach Anspruch 1 oder Anspruch 2, **dadurch gekennzeichnet, daß** die Datenspeicherungseinrichtung in einem paketvermittelten Netz benutzt werden kann.

5. Unterstützungssystem mit einer Kommunikationsdatenspeicherungseinrichtung nach Anspruch 1 oder Anspruch 2, **dadurch gekennzeichnet, daß** die Datenspeicherungseinrichtung bei Fernsprechverbindungen benutzt werden kann.

6. Unterstützungssystem mit einer Kommunikationsdatenspeicherungseinrichtung nach Anspruch 1 oder Anspruch 2, **dadurch gekennzeichnet, daß** die Datenspeicherungseinrichtung mit VoIP-Diensten (Voice over IP) benutzt werden kann.

7. Unterstützungssystem mit einer Kommunikationsdatenspeicherungseinrichtung nach Anspruch 1 oder Anspruch 2, **dadurch gekennzeichnet, daß** die Datenspeicherungseinrichtung mit Internetdiensten benutzt werden kann.

8. Unterstützungssystem mit einer Kommunikationsdatenspeicherungseinrichtung nach Anspruch 1 oder Anspruch 2, **dadurch gekennzeichnet, daß** die Datenspeicherungseinrichtung mit IP-Verbindungsdiensten benutzt werden kann.

9. Unterstützungssystem mit einer Kommunikationsdatenspeicherungseinrichtung nach Anspruch 1 oder Anspruch 2, **dadurch gekennzeichnet, daß** die Datenspeicherungseinrichtung von mehreren verschiedenen Netzelementen gesammelte Daten speichern kann.

10. Unterstützungssystem mit einer Kommunikationsdatenspeicherungseinrichtung nach einem der vorhergehenden Ansprüche, **dadurch gekennzeichnet, daß** sich die Verbindungsdatenspeicherung (1), die Dienstdatenspeicherung (2) und die Verhältnisdatenspeicherung (4) in einem gleichen physikalischen Speicher befinden.

11. Unterstützungssystem mit einer Kommunikationsdatenspeicherungseinrichtung nach einem der vorhergehenden Ansprüche 1-9, **dadurch gekennzeichnet, daß** sich die Verbindungsdatenspeicherung (1), die Dienstdatenspeicherung (2) und die Verhältnisdatenspeicherung (4) in getrennten physikalischen Speichern befinden.

## Revendications

1. Système de support à agencement de mémorisation de données de communications, dans lequel des enregistrements de données d'appels comportant des données d'appels relatives à des informations de trafic sont mémorisés dans une mémoire de données d'appels (1), des enregistrements de données de service comportant des données de service relatives à l'utilisation sont mémorisés dans une mémoire de données de service (2), et des enregistrements de données dimensionnelles relatifs à un client ou à des produits sont mémorisés dans une mémoire de données bidimensionnelles (3), étant **caractérisé en ce que** l'agencement est adapté pour mémoriser les relations entre les données d'appels et les données de service, ainsi que les caractéristiques de ces relations, comme attributs dans une mémoire de données de relations (4), au moment du chargement, en vue de leur utilisation dans des systèmes de support opérationnels.

2. Système de support à agencement de mémorisation de données de communications selon la revendication 1, **caractérisé en ce que** les mémoires de données (1), (2), (4) sont adaptées pour être utilisées dans un agencement d'entrepôt de données.

3. Système de support à agencement de mémorisation de données de communications selon la revendication 1 ou la revendication 2, **caractérisé en ce que** l'agencement de mémorisation de données est adapté pour être utilisé dans un réseau commuté par circuits.

4. Système de support à agencement de mémorisation de données de communications selon la revendication 1 ou la revendication 2, **caractérisé en ce que** l'agencement de mémorisation de données est adapté pour être utilisé dans un réseau commuté par paquets.

5. Système de support à agencement de mémorisation de données de communications selon la revendication 1 ou la revendication 2, **caractérisé en ce que** l'agencement de mémorisation de données est adapté pour être utilisé avec des appels de téléphonie.

6. Système de support à agencement de mémorisation de données de communications selon la revendication 1 ou la revendication 2, **caractérisé en ce que** l'agencement de mémorisation de données est adapté pour être utilisé avec des services de "Voix sur IP".

7. Système de support à agencement de mémorisation de données de communications selon la revendication 1 ou la revendication 2, **caractérisé en ce que** l'agencement de mémorisation de données est adapté pour être utilisé avec des services Internet.

8. Système de support à agencement de mémorisation de données de communications selon la revendication 1 ou la revendication 2, **caractérisé en ce que** l'agencement de mémorisation de données est adapté pour être utilisé avec des services "d'interconnexion IP".

9. Système de support à agencement de mémorisation de données de communications selon la revendication 1 ou la revendication 2, **caractérisé en ce que** l'agencement de mémorisation de données est adapté pour mémoriser des données collectées depuis de multiples éléments de réseau différents.

10. Système de support à agencement de mémorisation de données de communications selon l'une quelconque des revendications précédentes, **caractérisé en ce que** la mémoire de données d'appels (1), la mémoire de données de service (2) et la mémoire de données de relations (4) sont situées dans une même mémoire physique.

11. Système de support à agencement de mémorisation de données de communications selon l'une quelconque des revendications précédentes 1-9, **caractérisé en ce que** la mémoire de données d'appels (1), la mémoire de données de service (2) et la mémoire de données de relations (4) sont situées dans des mémoires physiques différentes.
